# EUROPEAN PATENT APPLICATION

(11) **EP 3 487 183 A1**
(43) Date of publication of application: **22.05.2019**
(21) Application number: 17839412.8
(22) Date of filing: 07.08.2017
(51) Int. Cl.: H04N 21/4725, G06F 3/0484

(54) **MOVING-IMAGE REPRODUCTION DEVICE, MOVING-IMAGE REPRODUCTION METHOD, MOVING-IMAGE DELIVERY SYSTEM, STORAGE MEDIUM IN WHICH MOVING-IMAGE REPRODUCTION PROGRAM IS STORED, AND MOVING-IMAGE REPRODUCTION PROGRAM**

(30) Priority: 09.08.2016 JP 2016156082
(71) Applicant: Paronym Inc., Tokyo 105-0013 (JP)
(72) Inventor: KOBAYASHI, Michio, Tokyo 105-0013 (JP); MURAOKA, Tetsuya, Tokyo 154-0004 (JP)
(74) Representative: Appleyard Lees IP LLP
(86) International application number: PCT/JP2017/028591
(87) International publication number: WO 2018/030341

(57) **Abstract**

[Problem] To provide a viewer, when the viewer takes an interest in an item displayed in a moving image, with information on the item in the moving image using a simple method.

[Solution] A moving image reproduction device that includes a display unit and an input unit is caused to execute the following (1) to (3). (1) Display a moving image in the display unit by displaying frames included in moving image data in the display unit while changing the frames from one to the next sequentially. (2) Set item areas while changing from one to the next as the frames are changed from one to the next sequentially, the item areas being set in advance to the frames. (3) When one of the item areas that is set in a corresponding one of the frames that is being displayed in the display unit is selected using the input unit, display item information associated with the item area in the display unit.

## Description

### Technical Field

The present invention relates to a moving image reproduction device, moving image reproduction method, moving image distribution system, storage medium with a moving image reproduction program stored therein, and moving image reproduction program.

### Background Art

In recent years, user-side terminals (e.g., tablet-type terminals, smartphones, personal computers, and the like) are used to view a moving image content. Patent Literatures 1 to 3, for example, disclose viewing broadcast programs such as TV dramas on a user-side terminal.

### Citation List

### Patent Literature

Patent Literature 1: JP 2012-119833A
Patent Literature 2: JP 2007-306399A
Patent Literature 3: JP 2004-23425A

### Summary of Invention

### Technical Problem

When a viewer takes an interest in an object (in some cases, referred to as "item" below) displayed in a moving image, the viewer may try to collect information about that item. For example, when a viewer is watching a TV drama, the viewer may come to want to purchase a bag held or owned by a main character of the TV drama and make an attempt to search for a sales website selling the bag on the Internet.

However, even when the viewer makes an attempt to search for the item displayed in the moving image, if the viewer does not know a search keyword, it is difficult to search for information on the intended item. Moreover, with an increase in an amount of operations (e.g., selecting a search keyword, accessing a search website, making a selection from a group of information retrieved, and so on) performed until information on the intended item is obtained, the probability of the viewer abandoning the search also increases, and thus, a good business opportunity may be lost. Further, even if the viewer reached an information site related to the item, reliability of the site may become an issue. More specifically, even when a sales website selling the intended item is found, if the viewer becomes suspicious about the reliability of the sales website, the viewer would hesitate to purchase the item, and in this case too, a business opportunity will be lost.

Meanwhile, if there were a system which, when the viewer takes an interest in an item displayed in a moving image, could guide the viewer to the information relating to the item, it would be possible to broaden a business opportunity by, for example, the manufacturer of the item or the like becoming a sponsor of the producer of the moving image. From such an aspect as well, the ability to provide a viewer with information on an item in a moving image using a simple method is valuable.

An object of the present invention is to provide a viewer, when the viewer takes an interest in an item displayed in a moving image, with information on the item in the moving image using a simple method.

### Solution to Problem

A primary aspect of the invention for achieving the aforementioned object is to cause a moving image reproduction device including a display unit and an input unit, to display a moving image in the display unit by displaying frames included in moving image data in the display unit while changing the frames from one to the next sequentially; set item areas while changing from one to the next as the frames are changed from one to the next sequentially, the item areas being set in advance to the frames; and when one of the item areas that is set in a corresponding one of the frames that is being displayed in the display unit is selected using the input unit, display item information associated with the item area in the display unit.

Other features of the invention are made clear by the following description and the drawings.

### Advantageous Effects of Invention

According to the present invention, it is possible to provide a viewer, when the viewer takes an interest in an item displayed in a moving image, with information on the item in the moving image using a simple method.

### Brief Description of Drawings

Figs. 1A to 1D are explanatory diagrams of an outline of the present embodiment.
Fig. 2 is an explanatory diagram of a moving image list screen that is displayed prior to reproduction of a moving image.
Fig. 3 is an explanatory diagram of a basic screen when a moving image is reproduced.
Figs. 4A to 4C are explanatory diagrams of a frame line display button 211 of an icon display part 21B.
Figs. 5A to 5D are explanatory diagrams of a performer icon 212 of the icon display part 21B.
Figs. 6A to 6D are explanatory diagrams of a music icon 213.
Figs. 7A to 7D are explanatory diagrams of a location icon 214.
Fig. 8 is a diagram illustrating a moving image distribution system according to the present embodiment.
Fig. 9 is an explanatory diagram of moving image data and metadata.
Fig. 10 is a flowchart of a process for generating an image to be displayed in a moving image display part 21A.
Figs. 11A and 11B are explanatory diagrams of a case where two item areas are set on a single screen (single frame).
Fig. 12 is a diagram describing a concept of a metadata creation method.
Figs. 13A to 13D are explanatory diagrams of a case where a user terminal 10 is a personal computer.
Fig. 14A is an explanatory diagram of a situation in which an area other than an item area is selected using an input unit. Fig. 14B is an explanatory diagram of acquired data that is acquired by the user terminal 10.

### Description of Embodiments

At least the following matters are made clear from the following description and the drawings.

Disclosed is a moving image reproduction device including a display unit, an input unit, and a control unit, wherein the control unit is configured to: display a moving image in the display unit by displaying frames included in moving image data in the display unit while changing the frames from one to the next sequentially; set item areas while changing from one to the next as the frames are changed from one to the next sequentially, the item areas being set in advance to the frames; and when one of the item areas that is set in a corresponding one of the frames that is being displayed in the display unit is selected using the input unit, display item information associated with the item area in the display unit. According to such a moving image reproduction device, a viewer can easily acquire information on an item in the moving image.

It is preferable that: when displaying each of the frames in the display unit, the control unit displays in the display unit an image indicating an item area set in a corresponding frame.

It is preferable that: item area setting data is set in advance for each of the frames, the item area setting data being for setting the item area, and the control unit is configured to: set the item areas while changing from one to the next as the frames are changed from one to the next sequentially, on the basis of the item area setting data set for each of the frames; when displaying each of the frames in the display unit, display, on the basis of corresponding item area setting data, the image indicating the item area in the display unit; and when the one of the item areas that is set on the basis of the corresponding item area setting data is selected using the input unit, display item information associated with the corresponding item area setting data in the display unit. In this way, the item area setting data can be used not only to set the item area but also to generate an image indicating the item area.

It is preferable that: displaying or hiding of the image indicating the item areas is selectable. When the image indicating the item area is hidden, the viewer can concentrate on viewing the moving image and hence enjoy the moving image.

It is preferable that: when the one of the item areas that is set in the corresponding one of the frames being displayed in the display unit is selected using the input unit, an item image is displayed as the item information. In this way, the viewer can easily acquire information on the item in the moving image.

It is preferable that: when the one of the item areas that is set in the corresponding one of the frames that is being displayed in the display unit is selected using the input unit, the item image is displayed in the vicinity of the item area. In this way, it becomes easy for the viewer to recognize that the item information can be acquired.

It is preferable that: when the one of the item areas that is set in the corresponding one of the frames that is being displayed in the display unit is selected using the input unit, the item image is displayed in a stock information display part indicating that the item information is stocked. In this way, it becomes easy for the viewer to recognize that the item information has been stocked.

It is preferable that: the stock information display part is located outside a moving image display part that displays the moving image; and
when an operation is performed using the input unit from the one of the item areas set in the moving image display part toward the stock information display part, the item image is displayed in the stock information display part. In this way, the viewer can easily comprehend the operation to stock the item information.

It is preferable that: event information is set in advance as the item information; and when the one of the item areas that is set in the corresponding one of the frames that is being displayed in the display unit is selected using the input unit, the item information associated with selected item area is displayed in the display unit as a result of a process according to the event information being executed. Moreover, it is preferable that: the event information indicates displaying a webpage of a set address, and the item information associated with the item area is displayed in the display unit as a result of the webpage being displayed. In this way, the viewer can easily acquire information on the item in the moving image.

It is preferable that: at least two item areas are set in a frame among the frames; and when an overlapping area of the two item areas set in the frame that is being displayed in the display unit is selected using the input unit, item information associated with one of the two item areas is displayed in the display unit. Moreover, it is preferable that: a priority is set for each of the two item areas set in each of the frames; and when the overlapping area of the two item areas set in the one of the frames that is being displayed in the display unit is selected using the input unit, the item information for an item area with a higher priority among the two item areas is displayed in the display unit. In this way, when the overlapping area of the two item areas is selected using the input part, the item information pertaining to either one of the item areas (one with a higher priority) can be displayed in the display unit.

It is preferable that: in a case where an entire area of one of the two item areas set in the one of the frames is encompassed by the other of the two item areas, the priority for the one of the two item areas is set to be higher than the priority for the other of the two item areas, and when the overlapping area of the two item areas set in the one of the frames that is being displayed in the display unit is selected using the input unit, item information associated with the one of the two item areas is displayed in the display unit. In this way, both item areas can be selected by the viewer.

It is preferable that: at least two item areas are set in a frame among the frames, and an entire area of one of the two item areas is encompassed by the other of the two item areas, and when an overlapping area of the two item areas set in the frame that is being displayed in the display unit is selected using the input unit, item information associated with the one of the two item areas is displayed in the display unit. In this way, both item areas can be selected by the viewer.

It is preferable that: when an area other than the item areas is selected using the input unit, extracted data is acquired by extracting information pertaining to selected area from the moving image data. In this way, preference information of the viewer can be acquired.

It is preferable that: when the area other than the item areas is selected using the input unit, an image in the selected area and its vicinity is extracted from a corresponding frame. In this way, preference information of the viewer can be acquired.

It is preferable that: the extracted data includes time code information for the frame of an extraction source and a coordinate of the area selected using the input unit. In this way, preference information of the viewer can be acquired.

It is preferable that: the extracted data is associated with attribute information of a viewer. In this way, preference information of the viewer can be acquired.

Disclosed is a moving image reproduction method for reproducing a moving image on the basis of moving image data and metadata associated with the moving image data, the moving image reproduction method including: displaying the moving image in a display unit by displaying frames included in the moving image data in the display unit while changing the frames from one to the next sequentially; setting item areas while changing from one to the next as the frames are changed from one to the next sequentially, the item areas being set in advance to the frames; and when one of the item areas that is set in a corresponding one of the frames that is being displayed in the display unit is selected using an input unit, displaying item information associated with the item area in the display unit. According to such a moving image reproduction method, the viewer can easily acquire information on the item in the moving image.

Disclosed is a moving image distribution system that distributes moving image data and metadata associated with the moving image data, the moving image distribution system including: a server configured to distribute the moving image data for causing a display unit of a moving image reproduction device to display a moving image by displaying frames in the display unit while changing the frames from one to the next sequentially; a server configured to distribute the metadata for setting item areas in advance to the frames, and setting the item areas while changing from one to the next as the frames are changed from one to the next sequentially; and a server configured to distribute a program for, when one of the item areas that is set in a corresponding one of the frames that is being displayed in the display unit is selected using an input unit of the moving image reproduction device, displaying item information associated with the item area in the display unit. According to such a moving image distribution system, the viewer can easily acquire information on the item in the moving image.]

Disclosed is a metadata creation method for creating metadata, the metadata creation method including: extracting a plurality of key frames from frames included in the moving image data; setting the item area associated with to each of extracted key frames on the basis of an image of corresponding one of the extracted key frames; setting an item area associated with one of the frames other than the key frames through interpolation based on the item area corresponding to one of the key frames and the item area corresponding to another one of the key frames. According to such a metadata creation method, an amount of work for metadata creation can be reduced.

It is preferable that: in a case where at least two item areas are set in a frame among the frames, and an entire area of one of the two item areas is encompassed by the other of the two item areas, priorities for the two item areas are set such that, when an overlapping area of the two item areas set in the frame that is being displayed in the display unit is selected using the input unit, the one of the two item areas is selected. In this way, both item areas can be selected by the viewer.

Disclosed is a storage medium with a moving image reproduction program stored therein, the moving image reproduction program causing a moving image reproduction device including a display unit and an input unit to execute: displaying a moving image in the display unit by displaying frames included in moving image data in the display unit while changing the frames from one to the next sequentially; setting item areas while changing from one to the next as the frames are changed from one to the next sequentially, the item areas being set in advance to the frames; and when one of the item areas that is set in a corresponding one of the frames that is being displayed in the display unit is selected using the input unit, displaying item information associated with the item area in the display unit. According to such a storage medium with a moving image reproduction program stored therein, the viewer can easily acquire information on the item in the moving image.

Disclosed is a moving image reproduction program for causing a moving image reproduction device including a display unit and an input unit to execute: displaying a moving image in the display unit by displaying frames included in moving image data in the display unit while changing the frames from one to the next sequentially; setting item areas while changing from one to the next as the frames are changed from one to the next sequentially, the item areas being set in advance to the frames; and when one of the item areas that is set in a corresponding one of the frames that is being displayed in the display unit is selected using the input unit, displaying item information associated with the item area in the display unit. According to such a moving image reproduction program, the viewer can easily acquire information on the item in the moving image.

### Embodiments

### <Outline>

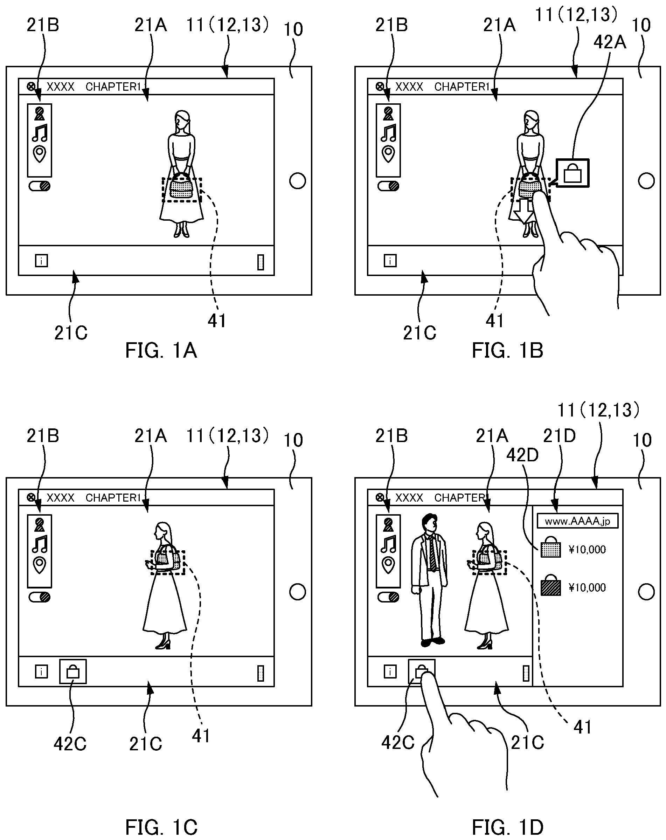

Figs. 1A to 1D are explanatory diagrams of an outline of the present embodiment.

As illustrated in Fig. 1A, a moving image (e.g., a TV drama) is being reproduced on a touch panel 11 of a user terminal 10 (e.g., a tablet-type terminal, smartphone, or the like of a viewer). On this screen, displayed is a scene where an actress holds a bag. An item area is set in advance in a frame (still image) included in the moving image data, and in this example, the item area is set in advance in an area of the bag on the screen. A frame line 41 (the rectangular dotted line in the figure) indicating the item area may be displayed during reproduction of the moving image or may be hidden if the frame line 41 constitutes an annoyance in viewing the moving image. During reproduction of a moving image, frames (still images) are displayed while being changed from one to the next sequentially, and thus the area occupied by the bag in the moving image (in the frames) changes from one moment to the next. The item area is also set to change from one moment to the next in conformity with the progress of the moving image, and the frame line 41 (the rectangular dotted line in the figure) indicating the item area also changes from one moment to the next.

As illustrated in Fig. 1B, when the user terminal 10 detects that a touch operation (an operation of touching with a finger) has been performed on the item area set in advance in the moving image, the user terminal 10 displays an item image 42A (e.g., a thumbnail image) that is associated with the item area. Even if the frame line 41 (the rectangular dotted line in the figure) indicating the item area were hidden, the item image 42A of the bag is displayed when the viewer takes an interest in the bag in the moving image and touches the bag on the touch panel 11, and therefore, the viewer is able to recognize that information pertaining to the bag can be acquired.

Further, as illustrated in Fig. 1B, when the user terminal 10 detects that a swipe operation (an operation of swiping a finger on the screen) has been performed on the item area set in advance in the moving image, the user terminal 10 stores item information associated with the item area as stock information. As illustrated in Fig. 1C, the user terminal 10, when having stored a given piece of item information as stock information (accumulated information), displays an item image 42C (e.g., a thumbnail image) associated with the stock information (stocked item information) in a stock information display part 21C on the touch panel 11. In other words, swiping the bag on the touch panel 11 downward by the viewer when the viewer takes an interest in the bag in the moving image causes the item information pertaining to the bag to be stocked, and allows the viewer to confirm in the stock information display part 21C that the item information pertaining to the bag has been stored in the user terminal 10.

As illustrated in Fig. 1D, when the user terminal 10 detects that a touch operation (an operation of tapping with a finger) has been performed on the area of the item image 42C displayed in the stock information display part 21C, the user terminal 10 performs a process according to event information associated with the item image 42C (item information). In this example, the item information pertaining to the bag is associated with an address of a webpage of a seller of the bag, and when the viewer performs a touch operation on the item image 42C of the bag, the webpage relating to the bag is displayed on the touch panel 11 (display unit 12). Note that the display screen of the webpage of the bag corresponds not only to the item information pertaining to the bag but also to the item image 42D of the bag. Regarding a method of displaying the webpage, the webpage may be displayed together with the moving image being reproduced in the manner of a multi-screen as illustrated in Fig. 1D, or may be displayed singly. The process according to the event information is not limited to displaying a webpage.

### <Operation Screen>

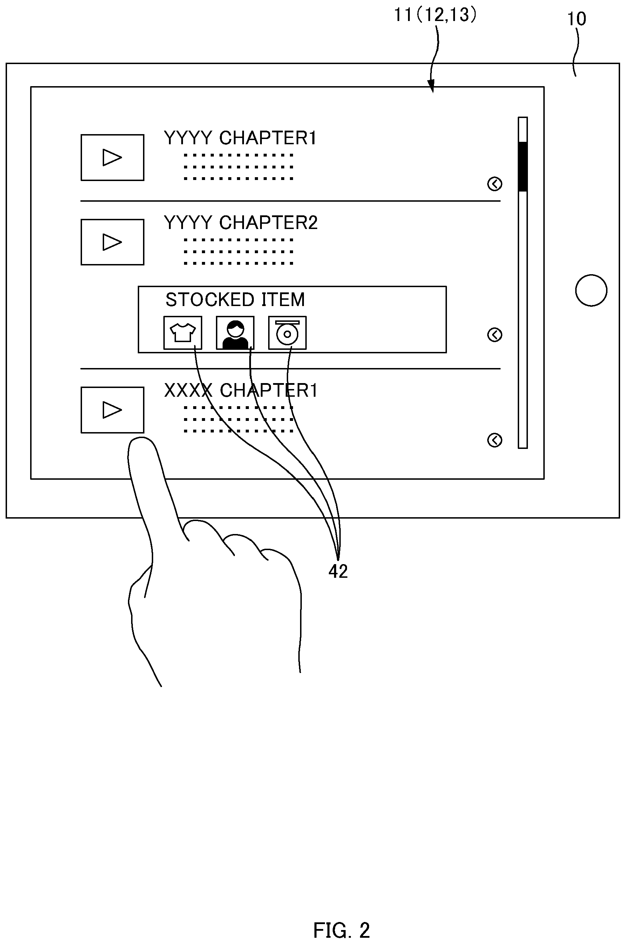

Fig. 2 is an explanatory diagram of a moving image list screen that is displayed prior to reproduction of a moving image. When a moving image reproduction program according to the present invention is activated, the user terminal 10 displays a list of reproducible moving images (moving image list screen). The user terminal 10 displays a thumbnail image, title, overview text, and the like for each reproducible moving image. When the user terminal 10 detects that a touch operation has been performed on an area of a thumbnail image on the moving image list screen, the user terminal 10 reproduces the moving image that is associated with the thumbnail image.

In a case where stock information has already been stored in relation to the reproduced moving image, the user terminal 10 displays an item image 42 associated with the stock information on the moving image list screen. When the user terminal 10 detects that a touch operation has been performed on the area of the item image 42 displayed on the moving image list screen, the user terminal 10 performs a process according to event information associated with the item image 42.

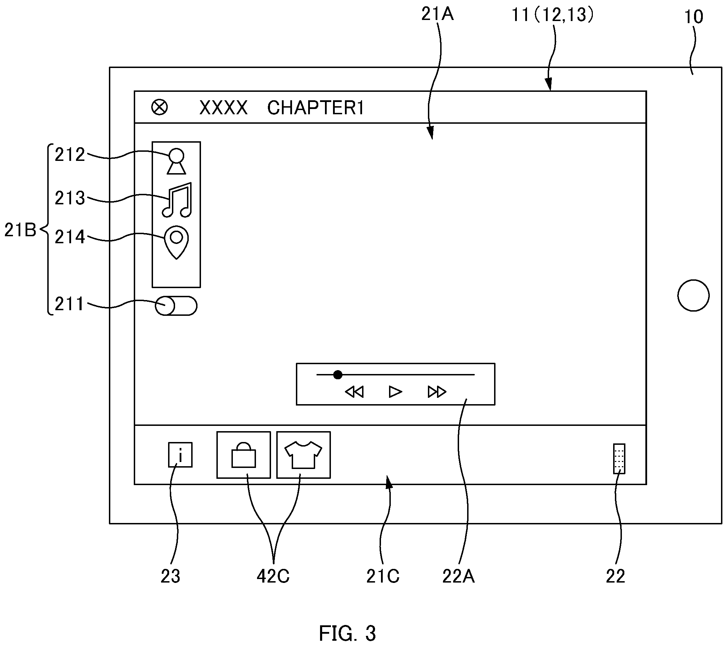

Fig. 3 is an explanatory diagram of a basic screen when a moving image is reproduced. On the basic screen, a moving image display part 21A, an icon display part 21B, and the stock information display part 21C are mainly provided.

The moving image display part 21A displays a reproduced moving image. When a touch operation is performed on a remote-controller icon 22 on the basic screen, a controller 22A (control image) is displayed in the moving image display part 21A (or, the controller 22A having been displayed is hidden). The user terminal 10 controls reproduction, fast-forward, rewind, and the like of the moving image according to the operation performed on the controller 22A.

The icon display part 21B displays various types of icons. In this example, a frame line display button 211, a performer icon 212, a music icon 213, a location icon 214, and the like are displayed in the icon display part 21B. Description on these items will be given later. When a touch operation is performed on an information icon 23 on the basic screen, the icon group having been displayed in the icon display part 21B is hidden (or, an icon having been hidden is displayed).

The stock information display part 21C displays the item image(s) 42C associated with the stock information (stocked item information). The stock information display part 21C is located under the moving image display part 21A. Thus, the stock information display part 21C is located in the direction in which the swipe operation is performed as illustrated in Fig. 1B, and it is easy for the viewer to comprehend the operation to stock the item information. As already described, the user terminal 10 performs a process according to event information associated with the item image 42C (item information) in response to the operation performed on the item image 42C displayed in the stock information display part 21C.

On the basic screen, apart from the above, it is also possible to provide a browser display part 21D for displaying a webpage (see Fig. 1D).

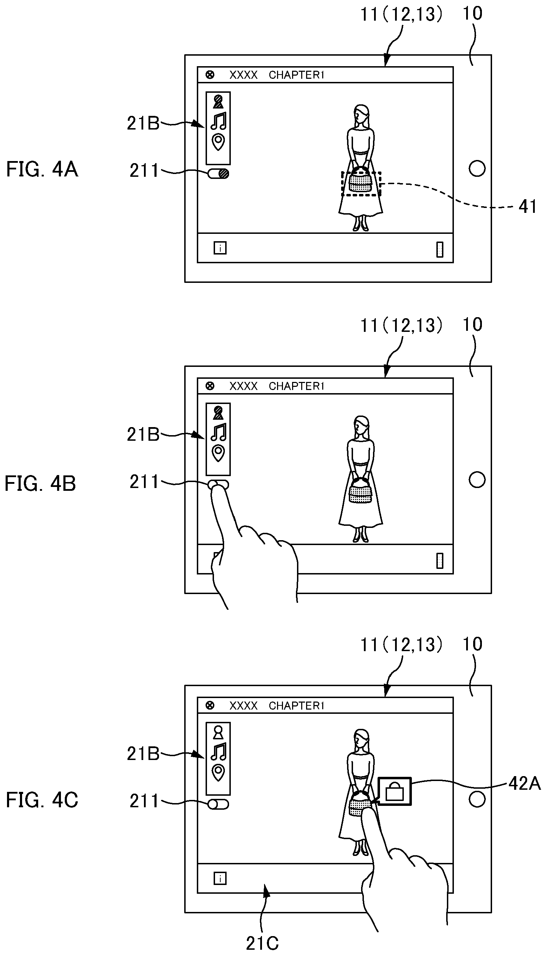

Figs. 4A to 4C are explanatory diagrams of a frame line display button 211 of the icon display part 21B. The frame line display button 211 is a button for selecting between display and hiding of the frame line 41 indicating the item area.

As illustrated in Fig. 4A, in the present embodiment, the item area is set in the area that is occupied by the bag in the moving image, and the frame line 41 (the rectangular dotted line in the figure) indicating the item area is displayed in accordance with the set item area. The viewer recognizes that the frame line 41 is displayed in the moving image display part 21A, and thus the viewer is able to notice that some kind of information is associated with the frame line 41. Moreover, since the image of the bag (the image of the bag in the moving image) is located inside the frame line 41, the viewer is able to infer that the information on the bag is associated with the frame line 41.

As illustrated in Fig. 4B, when the user terminal 10 detects that a touch operation has been performed on the frame line display button 211 and detects that an instruction to hide the frame line 41 has been given, the user terminal 10 hides the frame line 41 of the moving image display part 21A even if an item area is set for the frame being displayed. Accordingly, the viewer is able to concentrate on viewing the moving image without being bothered by display of the frame line 41, and can enjoy the moving image. In particular, if the frame line 41 that changes from one moment to the next is displayed in superposition on the moving image, the viewer may experience annoyance and boredom, so a mode in which the frame line 41 can be hidden is favorable.

As illustrated in Fig. 4C, even when the frame line 41 is hidden, an item area is set for the frames (still images), so when the viewer performs a touch operation on the item area, the user terminal 10 performs a process in an equivalent manner to the case where the frame line 41 is displayed. In other words, as illustrated in Fig. 4C, when the user terminal 10 detects that a touch operation (an operation of touching with a finger) has been performed on the item area set in advance in the moving image, the user terminal 10 displays the item image 42A (e.g., a thumbnail image) that is associated with the item area. Then, when the user terminal 10 detects that a swipe operation (an operation of swiping a finger on the screen) has been performed on the item area set in advance in the moving image, the user terminal 10 stores item information associated with the item area as stock information.

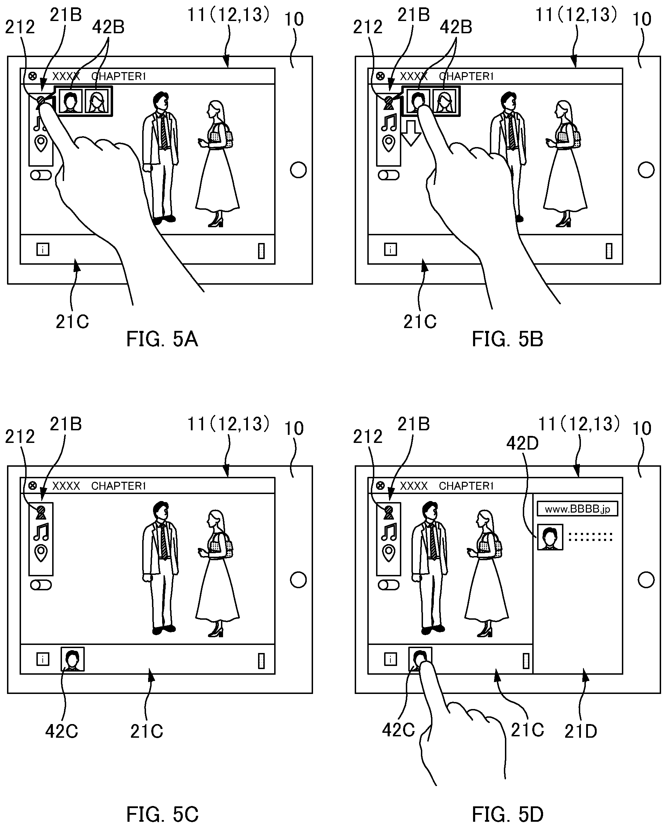

Figs. 5A to 5D are explanatory diagrams of a performer icon 212 of the icon display part 21B. In a scene (frames) where a performer (an actress, an actor, or the like) is displayed in the moving image, the scene is associated in advance with information pertaining to the performer, which serves as item information. In a case where the item information pertaining to the performer is associated, the user terminal 10 displays the performer icon 212 of the icon display part 21B while changing a color of the performer icon 212 (for example, changes the color from white to green). When the viewer recognizes that the color of the performer icon 212 has changed, the viewer is able to recognize that information pertaining to the performer displayed in the moving image can be acquired.

As illustrated in Fig. 5A, when the user terminal 10 detects that a touch operation has been performed on the performer icon 212, and item information pertaining to the performer is associated with the frame, the user terminal 10 displays an item image 42B (e.g., a thumbnail image of the performer) that is associated with the item information. In this example, two performers are displayed on the screen and item information pieces pertaining to the two performers are associated with the frame, and therefore, item images 42B (thumbnail images) pertaining to the two performers are displayed when the viewer performs a touch operation on the performer icon 212.

As illustrated in Fig. 5B, when the user terminal 10 detects that a swipe operation has been performed on the item image 42B (thumbnail image) of any one of the performers, the user terminal 10 stores the item information pertaining to the performer as stock information. Further, as illustrated in Fig. 5C, the user terminal 10 displays the thumbnail image of the performer in the stock information display part 21C as an item image 42C associated with the stock information (stocked item information). Furthermore, as illustrated in Fig. 5D, when the user terminal 10 detects that a touch operation has been performed on the item image 42C of the performer displayed in the stock information display part 21C, the user terminal 10 performs a process according to event information associated with the item image 42C (item information) in the manner of, for example, displaying a page introducing the performer in the webpage of a talent agency.

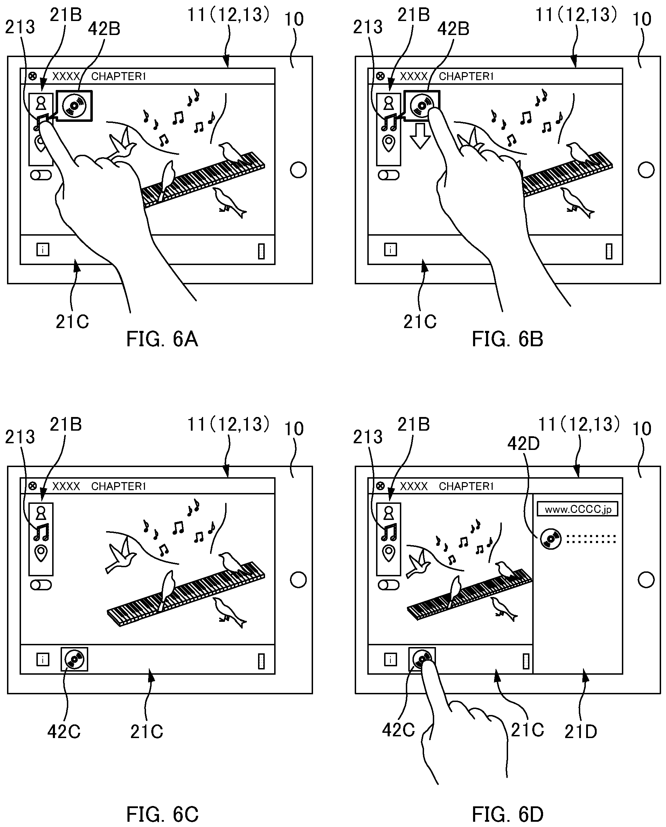

Figs. 6A to 6D are explanatory diagrams of the music icon 213. In a scene (frames) where a piece of music (so-called BGM) is played in the moving image, the scene (frames) is associated in advance with information pertaining to the piece of music, which serves as item information. When the frame is associated with item information pertaining to the piece of music, the user terminal 10 displays the music icon 213 of the icon display part 21B while changing a color of the music icon 213. The viewer recognizes that the color of the music icon 213 has changed, and thus recognizes that information pertaining to the piece of music played in the moving image can be acquired.

As illustrated in Fig. 6A, when the user terminal 10 detects that a touch operation has been performed on the music icon 213, and item information pertaining to the piece of music is associated with the frame, the user terminal 10 displays an item image 42B (e.g., a jacket image such as a disc jacket image) associated with the item information. As illustrated in Fig. 6B, when the user terminal 10 detects that a swipe operation has been performed on the item image 42B (jacket image), the user terminal 10 stores the item information pertaining to the piece of music as stock information. Further, as illustrated in Fig. 6C, the user terminal 10 displays the jacket image pertaining to the piece of music in the stock information display part 21C as an item image 42C associated with the stock information (stocked item information). Furthermore, as illustrated in Fig. 6D, when the user terminal 10 detects that a touch operation has been performed on the item image 42C of the piece of music displayed in the stock information display part 21C, the user terminal 10 performs a process according to event information associated with the item image 42C (item information) in the manner of, for example, displaying a webpage that sells the piece of music.

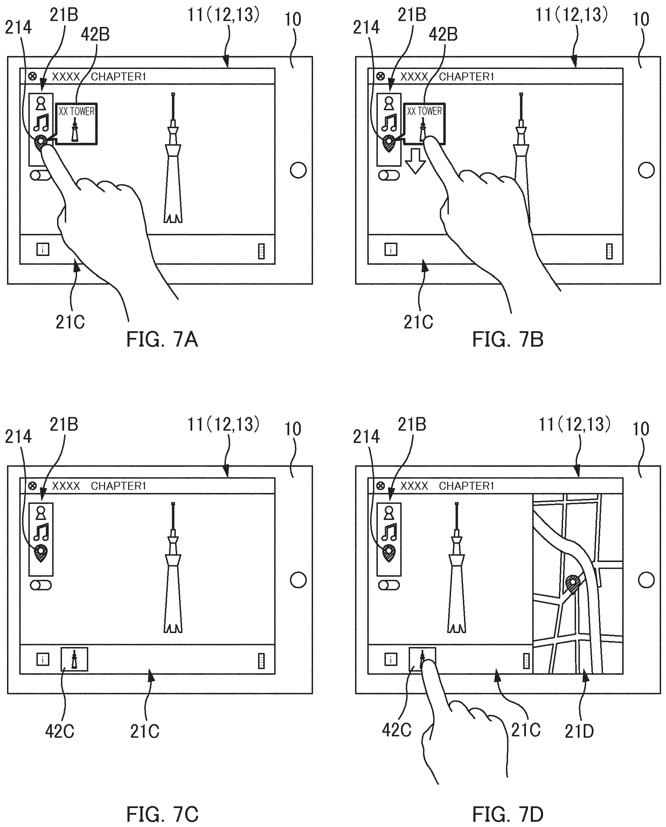

Figs. 7A to 7D are explanatory diagrams of the location icon 214. In a scene (frames) where, for example, a landmark is displayed in the moving image, the frames are associated in advance with information pertaining to the location, which serves as item information. When a frame is associated with item information pertaining to the location, the user terminal 10 displays the location icon 214 of the icon display part 21B while changing a color of the location icon 214. The viewer can recognize that the color of the location icon 214 has changed, and thus recognize that information pertaining to the location displayed in the moving image can be acquired.

As illustrated in Fig. 7A, when the user terminal 10 detects that a touch operation has been performed on the location icon 214, and item information pertaining to the location is associated with the frame, the user terminal 10 displays an item image 42B (e.g., a thumbnail image) associated with the item information. As illustrated in Fig. 7B, when the user terminal 10 detects that a swipe operation has been performed on the item image 42B, the user terminal 10 stores the item information pertaining to the location as stock information. Further, as illustrated in Fig. 7C, the user terminal 10 displays the thumbnail image of the location in the stock information display part 21C as an item image 42C associated with the stock information. Further, as illustrated in Fig. 7D, when the user terminal 10 detects that a touch operation has been performed on the item image 42C of the location displayed in the stock information display part 21C, the user terminal 10 performs a process according to event information associated with the item image 42C in the manner of, for example, displaying a webpage that introduces the location, displaying a map of the location, displaying information indicating a route to the location, or displaying introductory text for the location.

### <Overall Configuration>

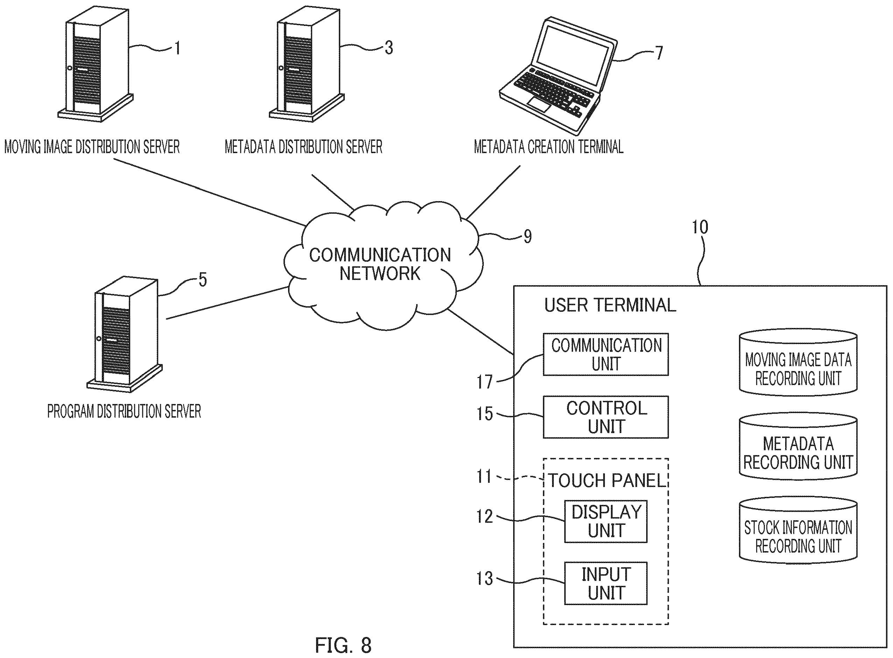

Fig. 8 is a diagram illustrating a moving image distribution system according to the present embodiment. The moving image distribution system includes a moving image distribution server 1, a metadata distribution server 3, and the user terminal 10. The moving image distribution server 1 and the metadata distribution server 3 are connected to the user terminal 10 through a communication network 9 so as to be able to communicate with one another. The communication network 9 includes, for example, the Internet, telephone line network, wireless communication network, LAN, VAN, and the like; in this example, the communication network 9 is assumed to be the Internet.

The moving image distribution server 1 is a server for distributing a large number of moving image contents. In the present embodiment, the moving image distribution server 1 transmits moving image data to the user terminal 10 in streaming form. However, the method of distributing (transmitting) moving image data may also adopt download form or progressive download form.

The metadata distribution server 3 is a server for distributing metadata including the aforementioned item information (information related to an item, such as the item image 42, event information, item area). In the present embodiment, a part of the metadata ("reference data" to be described later) is distributed in preload form prior to reproduction of a moving image, whereas another part of the metadata ("frame-associated data" to be described later) is distributed in progressive download form. Note, however, that the methods of distributing metadata are not limited to these, and may be in download form or streaming form, for example. In the present embodiment, for the sake of convenience of explanation, description is made on the assumption that metadata is separated from moving image data, but metadata may be stored in moving image data (moving image file).

The metadata in the metadata distribution server 3 is created by a metadata creation terminal 7. A metadata creation method by the metadata creation terminal 7 will be described later.

The user terminal 10 is an information terminal capable of reproducing moving images (moving image reproduction device). In this example, the user terminal 10 is assumed to be a tablet-type portable terminal. The user terminal 10 includes hardware such as a central processing unit (CPU: not illustrated in the figure), memory, storage device, communication module, touch panel 11 (display unit 12 and input unit 13), and the like. A moving image reproduction program is installed in the user terminal 10, and the operations mentioned earlier are realized as a result of the user terminal 10 executing the moving image reproduction program. The moving image reproduction program can be downloaded to the user terminal 10 from a program distribution server 5.

The user terminal 10 is not limited to a tablet-type portable terminal, and may be a smartphone or personal computer, for example. In a case where the user terminal 10 is a smartphone, the display unit 12 and the input unit 13 are formed from the touch panel 11, similarly to the case of the tablet-type portable terminal. In a case where the user terminal 10 is a personal computer, the display unit 12 is formed from, for example, a liquid crystal display or the like, and the input unit 13 is formed from a mouse, keyboard, and the like. An operation method or the like in the case where the user terminal 10 is a personal computer will be described in another embodiment.

The user terminal 10 includes the display unit 12 and the input unit 13. The display unit 12 has a function for displaying a variety of screens. In the present embodiment, the display unit 12 is realized by a display of the touch panel 11, a controller that controls display in the display, and the like. The input unit 13 has a function for receiving an input of and detecting instructions from the user. In the present embodiment, the input unit 13 is realized by a touch sensor of the touch panel 11, or the like. Note that while in the present embodiment, the display unit 12 and input unit 13 are mainly realized by the touch panel 11, the display unit 12 and input unit 13 may instead be formed from separate components. A control unit 15 has a function that controls the user terminal 10. The control unit 15 has a function for processing moving image data to reproduce (display) a moving image, a function for processing metadata (to be described later), and other relevant functions. Processing of moving image data and metadata will be made clear by the following description. The control unit 15 also has a browser function acquiring information on a webpage and displaying the webpage, or the like. In the present embodiment, the control unit 15 is realized by the CPU (not illustrated in the figure), the storage device and memory having stored therein the moving image reproduction program, and the like.

A communication unit 17 has a function for connecting to the communication network 9. The communication unit 17 executes: reception of moving image data from the moving image distribution server 1; reception of metadata from the metadata distribution server 3; and request of data from the moving image distribution server 1 and/or metadata distribution server 3.

A moving image data storage unit has a function of storing moving image data. In the case where the streaming-form distribution is employed, the moving image data storage unit stores moving image data temporarily, whereas in the case where the download-form distribution is employed, the moving image data storage unit stores the downloaded moving image data and retains the moving image data. A metadata storage unit has a function of storing metadata. A stock information storage unit has a function of storing the stocked item information in association with the moving image data.

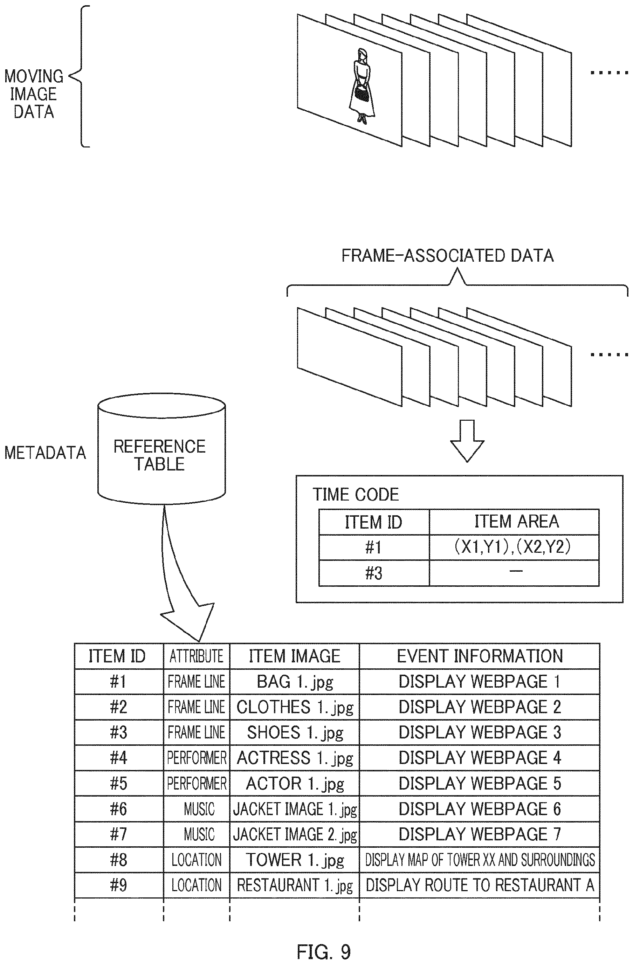

Fig. 9 is an explanatory diagram of the moving image data and the metadata.

The moving image data is constituted by a series of continuous frames (image data). A moving image data processing unit of the user terminal 10 generates frames from the moving image data received from the moving image distribution server 1, causes the display unit 12 to display the generated frames while changing the generated frames from one to the next sequentially, whereby the moving image is reproduced.

The metadata includes the frame-associated data and the reference data.

The frame-associated data is metadata that is associated with each frame of moving image data. The frame-associated data is transmitted from the metadata distribution server 3 to the user terminal 10 in progressive download form and is stored in the metadata storage unit of the user terminal 10.

The frame-associated data includes a time code and item information. The time code is data for associating with a frame (data for synchronization with a moving image). The item information of the frame-associated data is constituted by an item ID and item area setting data. The item ID is an identifier for associating with item information stored in the reference data. The item area setting data is data for setting the item area. In the present embodiment, since the item area is rectangular, the item area setting data is constituted by data formed of coordinates of two points of opposite vertexes that are needed in setting the rectangular area. However, the shape of the item area is not limited to rectangular, and may be circular, for example, in which case the item area setting data is constituted by data constituted by a coordinate of a central point and a radius. In this way, an item area (item area setting data) is set in advance for a frame. There is no need, however, to set an item area for all frames, and for frames in which no item is displayed, for example, an item area may not be set. As will be described later, the item areas are set so as to be changed from one to the next sequentially as the frames are changed from one to the next sequentially. Further, as will be described later, the item area setting data is used not only to set an item area but also to generate an image of the frame line 41 indicating the item area (see, for example, Fig. 1A).

The reference data is data for defining a content of item information. The reference data is transmitted from the metadata distribution server 3 to the user terminal 10 in preload form prior to reproduction of a moving image, and is stored in the metadata storage unit of the user terminal 10.

The reference data includes an item ID, attribute data, item image data, and event information. The item ID is an identifier of item information. The attribute data is data indicating an attribute of item information, and in this example, includes four types: "frame line", "performer", "music", and "location". The types of attribute are not limited to these, however. The item image data is data of the item image 42 and is, for example, thumbnail image data. The event information is information used to set a process that the user terminal 10 is to execute when an operation is performed on the item image 42 (42C) displayed in the stock information display part 21C. For example, as the event information, activation of a browser unit, address of a webpage to be displayed, and the like are set.

It is also possible not to provide the reference data but to define a content of the item information in the frame-associated data. However, a data amount of event information, or the like is large, and thus a data amount of the frame-associated data becomes large if event information is included in the frame-associated data, resulting in an increase in a processing load of the user terminal 10. In this respect, the present embodiment employs the reference data, thereby enabling a reduction in a data amount of the frame-associated data.

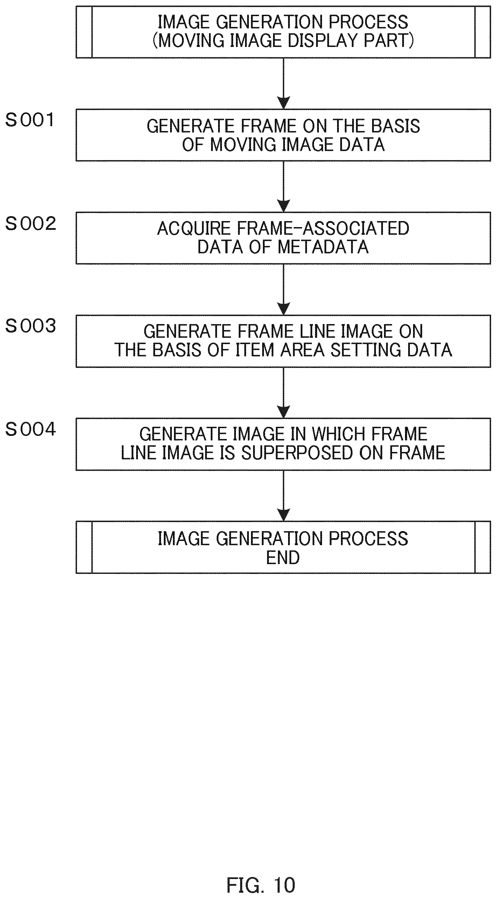

Fig. 10 is a flowchart of a process for generating an image to be displayed in the moving image display part 21A. When, for example, a screen of the moving image display part 21A illustrated in Fig. 1A is to be displayed, the control unit 15 of the user terminal 10 executes more or less the following process.

First, the control unit 15 generates a frame (still image) to be displayed on the basis of the moving image data in the moving image data storage unit (S001). Next, the control unit 15 acquires, from the metadata storage unit, frame-associated data as a time code associated with the frame (S002). In other words, the control unit 15 acquires item information associated with the frame. In a case where item area setting data is included in the frame-associated data and the frame line display button 211 is set so as to display the frame line 41, the control unit 15 generates an image of the frame line 41 indicating the item area (the image of the rectangular dotted line illustrated in Fig. 1A) on the basis of the item area setting data (S003). Then, the control unit 15 generates an image in which the image of the frame line 41 is superposed on the frame (still image) of the moving image data (S004). The thus generated image is displayed in the moving image display part 21A. When displaying frames (still images) one after the other in the moving image display part 21A for reproduction of the moving image, the control unit 15 executes the aforementioned process repeatedly. A coordinate of the item area in a frame differs from frame to frame, so when the control unit 15 displays the frames one after the other, the frame line 41 indicating the item area also changes from one moment to the next.

When displaying the screen of the icon display part 21B, the control unit 15 of the user terminal 10 executes more or less the following process. First, the control unit 15 refers to the reference data by using the item ID of the frame-associated data acquired in S002 mentioned earlier as a key and acquires attribute data pertaining to the item information. Then, on the basis of presence or absence of the attribute data, the control unit 15 determines a color of each icon in the icon display part 21B and displays icons in the icon display part 21B in accordance with the determined colors. Accordingly, during reproduction of the moving image, when item information is associated with a screen being displayed, an icon in the icon display part 21B associated with the item information is displayed with the color thereof changed (for example, changed from white to green).

When a touch operation is performed on the moving image display part 21A as illustrated in Fig. 1B, the control unit 15 of the user terminal 10 executes more or less the following process. First, the control unit 15 acquires from the touch panel 11 (input unit 13) the coordinate of a position on which the touch operation (operation of touching with a finger) has been performed. The control unit 15 also acquires from the metadata storage unit the frame-associated data at the time of the touch operation and acquires the item area setting data at the time of the touch operation. Then, the control unit 15 compares the coordinate of the position on which the touch operation has been performed with the item area that is set on the basis of the item area setting data, and determines whether or not the coordinate of the position on which the touch operation has been performed falls within the range of the item area. If the coordinate of the position on which the touch operation has been performed falls within the range of the item area, the control unit 15 refers to the reference data by using the item ID of the item area as a key, acquires an associated item image 42 (e.g., a thumbnail image), and displays the item image 42A near the coordinate of the position on which the touch operation has been performed.

Furthermore, when a swipe operation (an operation of swiping a finger on the screen) has been performed as illustrated in Fig. 1B, the control unit 15 of the user terminal 10 stores the corresponding item information in the stock information storage unit. Besides, when item information is stored in the stock information storage unit, the control unit 15 of the user terminal 10 acquires an item image 42 (e.g., a thumbnail image) associated with the item information and displays the item image 42 in a predetermined area of the stock information display part 21C. Accordingly, as illustrated in Fig. 1C, the item image 42C (e.g., a thumbnail image) associated with the stock information (stocked item information) is displayed in the stock information display part 21C on the touch panel 11 (display unit 12).

When a touch operation is performed on the stock information display part 21C as illustrated in Fig. 1D, the control unit 15 of the user terminal 10 executes more or less the following process. First, the control unit 15 acquires from the touch panel 11 (input unit 13) the coordinate of the position on which the touch operation (operation of touching with a finger) has been performed. The control unit 15 also acquires an area of the item image 42C that is being displayed in the stock information display part 21C. Then, the control unit 15 compares the coordinate of the position on which the touch operation has been performed with the area of the item image 42C that is being displayed in the stock information display part 21C and determines whether or not the coordinate of the position on which the touch operation has been performed falls within the range of the item image 42C of the stock information display part 21C. If the coordinate of the position on which the touch operation has been performed falls within the range of the item image 42C in the stock information display part 21C, the control unit 15 refers to the reference data by using the item ID of the item image 42 as a key, acquires event information of the associated item information, and executes a process (e.g., to display a predetermined webpage, or the like) according to the event information.

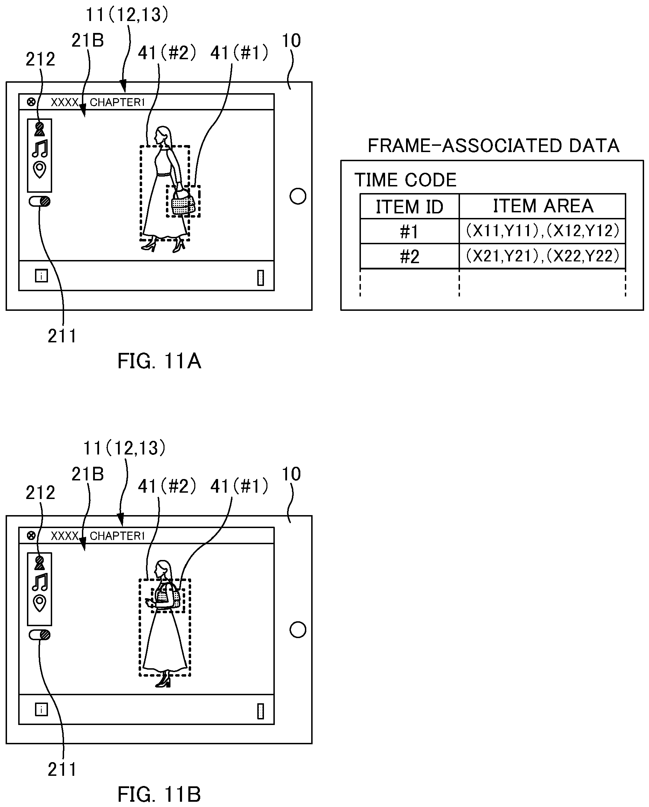

Fig. 11A is an explanatory diagram of a case where two item areas are set on a single screen (single frame). In the right side of the figure, illustrated is frame-associated data with a time code associated with the frame. This frame-associated data includes two pieces of item area setting data. Item areas indicated by the two pieces of item area setting data are set so as to be associated with the area of the bag and the area of the clothes on the screen. In a case where the frame-associated data includes two or more pieces of item area setting data as described above, the control unit 15 displays a plurality of frame lines 41 (the rectangular dotted lines in the figure) indicating the respective item areas on the basis of the respective pieces of item area setting data, as illustrated in the left side of the figure.

In a case where two or more item areas are set, an overlapping area may exist between two item areas. For example, as illustrated in Fig. 11A, when the areas of the bag and the clothes overlap each other on the screen, this results in a partial overlap of the two item areas. In a case where two item areas partially overlap each other in this way and a touch operation is performed on an overlapping area, the control unit 15 of the user terminal 10 determines that an item area with a higher priority has been selected. Priorities among item areas may be pre-set in the frame-associated data, in which case the control unit 15 of the user terminal 10 makes determination on which item area has been selected according to the priorities set in the frame-associated data.

Fig. 11B is another explanatory diagram of the case where two item areas are set on a single screen (single frame). As illustrated in Fig. 11B, an entire area of one item area may sometimes be encompassed by an area of another item area. In this example, the item area 41 (#1) of the bag is entirely encompassed by the area of the item area 41 (#2) of the clothes. In a case where an entire area of one item area is encompassed by an area of another item area in this way, the frame-associated data is set such that the encompassed item area (in this example, the item area 41 (#1) of the bag) has a higher priority than the encompassing item area 41 (#2). Accordingly, in a case where a touch operation has been performed on the overlapping area of the two item areas, the control unit 15 of the user terminal 10 determines that the encompassed item area (in this example, the item area 41(#1) of the bag) has been selected. Thus, both item areas are made selectable for the viewer.

### <Metadata Creation Method>

In the present embodiment, as illustrated in Fig. 9, frame-associated data (metadata) is associated with each frame of the moving image data, and item area setting data for setting an item area is set in the frame-associated data. The item area needs to be set so as to conform to movement of a predetermined item (e.g., a bag) displayed on the screen, and therefore, the item area setting data (two coordinates) needs to be set for each frame. The moving image data includes a large number of frames (e.g., 30 frames per second), however, so setting frame-associated data one by one for all frames would involve a huge amount of work. In this respect, in the present embodiment, frame-associated data is set in the following manner to reduce an amount of work.

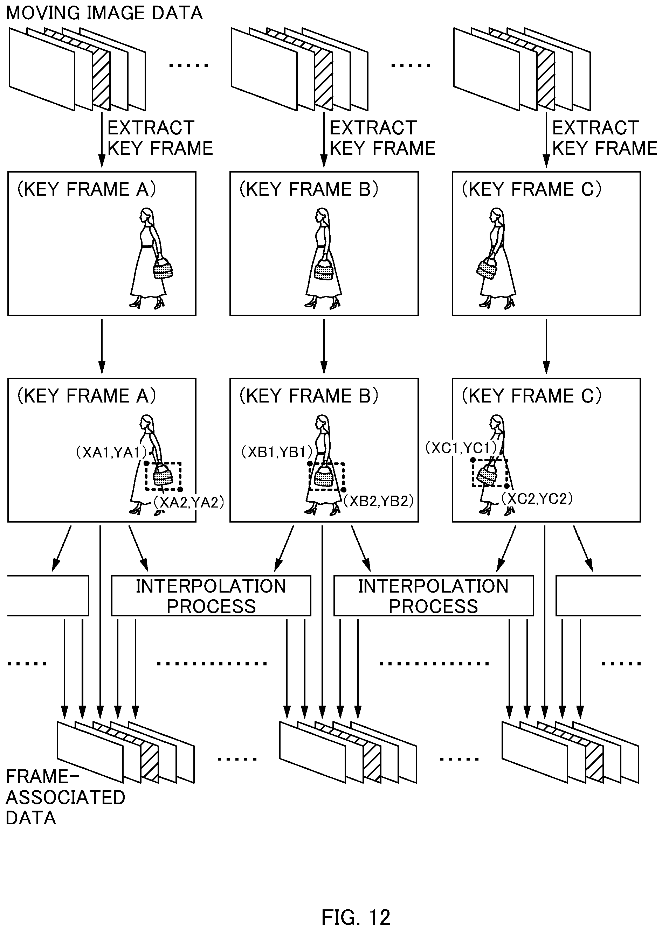

Fig. 12 is a diagram describing a concept of a metadata creation method. The process for creating metadata described below is executed by the metadata creation terminal 7 illustrated in Fig. 8.

First, the metadata creation terminal 7 acquires moving image data for which metadata (frame-associated data) is to the created. The moving image data is downloaded to the metadata creation terminal 7 from the moving image distribution server 1.

Then, from the moving image data including a large number of frames, the metadata creation terminal 7 extracts key frames at time intervals. The key frames may be frames that are extracted at every predetermined time interval set in advance (e.g., time interval of several seconds), or may be frames that are arbitrarily selected according to scenes in the moving image. It is desirable that the time intervals between the key frames be shorter where there is active motion and be longer where there is moderate motion. The number of key frames extracted will be significantly less than the number of frames included in the moving image data.

Next, the metadata creation terminal 7 sets the two coordinates for setting the item area (the coordinates of two points of opposite vertexes of the rectangular frame line 41) according to the area in each key frame that is occupied by a predetermined item (the bag in this example). In this example, it is assumed that coordinates (XA1, YA1) and (XA2, YA2) are set for a key frame A, coordinates (XB1, YB1) and (XB2, YB2) are set for a key frame B, and coordinates (XC1, YC1) and (XC2, YC2) are set for a key frame C.

When setting the two coordinates for setting the item area, the metadata creation terminal 7 displays a screen of a key frame(s) on the display. An operator sets the coordinates of the two points by using an input device (e.g., a mouse) in such a manner that the item area encompasses the image of a predetermined item (in this example, the image of the bag) in each key frame displayed. The metadata creation terminal 7 stores the key frame in association with the positions of the coordinates of the two points input by the operator. In this manner, each key frame is displayed so that the operator can set an item area while viewing motion images (the screen of the key frame), and thus, work for setting an item area becomes convenient.

Next, the metadata creation terminal 7 creates frame-associated data (metadata) associated with each frame and also sets item area setting data for the frame-associated data. At this time, coordinates of two points input by the operator are set for the item area setting data associated with each key frame. For example, for the item area setting data associated with the key frame A, the coordinates (XA1, YA1) and (XA2, YA2) are set as the item area setting data. Meanwhile, for item area setting data associated with each of frames other than the key frames, coordinates are set interpolated by using coordinates that have been input for two key frames, one immediately preceding the target frame and the other immediately following the target frame. For example, for item area setting data for a frame between the key frame A and key frame B, there is set a coordinate that is interpolated by using the coordinates (XA1, YA1) and (XB1, YB1) and a coordinate that is interpolated by using the coordinates (XA2, YA2) and (XB2, YB2). Thus, the item area setting data is set by an interpolation process in this way, and therefore a process for setting coordinates of two points can be omitted for some frames, and an amount of setting work can be reduced.

The method of setting item areas associated with frames other than the key frames through interpolation may be a method in which each coordinate is calculated through linear interpolation of coordinates of two points (the so-called linear interpolation), and other than this method, may be a method that employs image analysis. For example, in the key frame A, the metadata creation terminal 7 extracts an image of a rectangular area (equivalent to an item area) that is defined by the coordinates (XA1, YA1) and (XA2, YA2) input by the operator, and extracts features amounts (for example, color information, or the like) of the image in the rectangular area. Similarly, in the key frame B, the metadata creation terminal 7 extracts an image of a rectangular area that is defined by the coordinates (XB1, YB1) and (XB2, YB2) input by the operator, and extracts feature amounts of the image in the rectangular area. Then, the metadata creation terminal 7 may extract, from each frame between the key frames A and B, an image within a range from two feature amounts extracted from the key frame A and from the feature amounts extracted from the key frame B (e.g., an image within a predetermined color range), and on the basis of the rectangular area surrounding the extracted image, the metadata creation terminal 7 may interpolate item area setting data associated with that frame.

Note that the metadata creation terminal 7 can set two pieces of item area setting data for a single frame. Moreover, when the metadata creation terminal 7 sets two pieces of item area setting data and the two item areas partially overlap each other, the metadata creation terminal 7 can set priorities between the item areas. In particular, in the case where an entire area of one item area is encompassed in an area of another item area (see Fig. 11B), it is desired that the metadata creation terminal 7 set priorities to the frame-associated data such that the encompassed item area (e.g., the item area of the bag in Fig. 11B) has a higher priority than the encompassing item area (e.g., the item area of the clothes in Fig. 11B).

In the present embodiment, the metadata creation terminal 7 is assumed to be a computer of a metadata-creating agent who has undertaken a job of creating metadata, and the computer has installed therein a program that causes the computer to execute the aforementioned process (the process illustrated in Fig. 12). Moreover, in the present embodiment, it is assumed that the metadata-creating agent uploads the created metadata to the metadata distribution server 3 (see Fig. 8). Note, however, that the program that causes a computer to execute the aforementioned process (the process illustrated in Fig. 12) may be made open to the general public on the Internet so that unspecified individuals (e.g., affiliators) could install the program on their computers and that the metadata created by them may be uploaded on the metadata distribution server 3. In this case, it is preferable that the metadata distribution server 3 store the metadata together with information on the creators of the metadata (creator information) and evaluation information indicative of how the user evaluates the creators, in association with each other. In this way, the user is able to select a highly reliable metadata on the basis of the evaluation information pertaining to the creators and download the selected metadata.

### <Conclusion>

In the above-described embodiments, the moving image reproduction program causes the user terminal 10 (moving image reproduction device) including a display unit 12 and an input unit 13 to display frames included in moving image data in the display unit 12 while changing the frames from one to the next sequentially, to thereby display (reproduce) a moving image in the display unit 12. Here, item areas are set for the frames in advance (see Fig. 9), and the user terminal 10 sets the item areas while changing from one to the next as the frames are changed from one to the next sequentially. Thus, the setting is made such that the item areas change from one to the next in conformity with the progress of the moving image. When an item area that is set in a frame being displayed in the display unit 12 is selected using the input unit 13, the user terminal 10 causes the display unit 12 to display item information associated with selected item area (e.g., the item image 42A in Fig. 1B, the item image 42C in Fig. 1C, the item image 42D in Fig. 1D, or the like). Accordingly, the viewer can easily acquire information on the item in the moving image.

In the above-described embodiments, when displaying each of the frames in the display unit 12, the display unit 12 displays an image of the frame line 41 indicating the item area set in a corresponding frame. Accordingly, the range of the item area set in the frame can be recognized. Meanwhile, as illustrated in Figs. 4B and 4C, it is also possible to hide the frame line 41. Further, the image indicating the item area is not limited to the frame line 41 and may be a half-transparent rectangular image, for example.

In the above-described embodiments, when the item area set in the frame being displayed is selected using the input unit 13, an item image is displayed as the item information (e.g., the item image 42A in Fig. 1B, the item image 42C in Fig. 1C, the item image 42D in Fig. 1D, or the like). Accordingly, the viewer can easily acquire information on the item in the moving image.

In the above-described embodiments, when the item area set in the frame being displayed is selected using the input unit 13, the item image 42A (see Fig. 1B and Fig. 4C) is displayed in the vicinity of the item area. Accordingly, it becomes easy for the viewer to recognize that item information can be acquired.

In the above-described embodiments, when the item area set in the frame being displayed is selected using the input unit 13, the item image 42C is displayed in the stock information display part 21C (see Fig. 1C). Accordingly, it becomes easy for the viewer to recognize that item information has been stocked. Note that when the item area set in the frame being displayed is selected using the input unit 13, it is also possible to immediately execute a process according to event information and display, for example, a webpage or the like, instead of displaying the item image 42A in the vicinity of the item area (see Fig. 1B) or the item image 42C in the stock information display part 21C.

In the above-described embodiments, the stock information display part 21C is located on a lower side of (outside) the moving image display part 21A, and when a swipe operation toward the lower side (i.e., an operation of swiping a finger from the item area in the moving image display part 21A toward the stock information display part 21C) is performed using the input unit 13, the item image 42C is displayed in the stock information display part 21C (see Figs. 1B and 1C). Thus, since the stock information display part 21C is located in a direction in which the swipe operation is performed as illustrated in Fig. 1B, it is easy for the viewer to comprehend the operation to stock the item information. Note that as long as the stock information display part 21C is located on outside the moving image display part 21A, a location of the stock information display part 21C is not limited to a lower side of the moving image display part 21A and the stock information display part 21C may be located, for example, on a righthand side of the moving image display part 21A. In this case, it is preferable that when a swipe operation toward the righthand side (i.e., an operation of swiping a finger from the item area of the moving image display part 21A toward the stock information display part 21C) is performed using the input unit 13, the item image 42C be displayed in the stock information display part 21C. Note that a drag-and-drop operation may be performed in place of a swipe operation as will be described later.

In the above-described embodiments, event information is set in advance as item information (see Fig. 9), and when the item area that is set in the frame being displayed is selected using the input unit 13, the item information associated with selected item area is displayed in the display unit as a result of a process according to the event information being executed (see Fig. 1D). Accordingly, the viewer can easily acquire information on the item in the moving image.

In the above-described embodiments, the event information indicates displaying a webpage of a set address, and the item information associated with the item area is displayed in the display unit 12 as a result of the webpage being displayed (see Fig. 1D). The event information, however, is not limited to display of a webpage and may correspond to a different process.

In the aforementioned embodiment illustrated in Fig. 11B, at least two item areas are set in the frame and an entire area of the item area 41(#1) is encompassed by the item area 41(#2). In such a situation, when an overlapping area of the two item areas set in the frame being displayed is selected using the input unit, it is preferable that item information associated with the item area 41(#1) (in this example, item information pertaining to the bag) be displayed in the display unit 12. Accordingly, both item areas can be selected by the viewer.

In the above-described embodiments, disclosed are not only a moving image reproduction program but also a user terminal 10 (moving image reproduction device), a moving image reproduction method, a moving image distribution system (see Fig. 8), a metadata creation method (see Fig. 12), and the like.

### Other Embodiments

### <Case where user terminal 10 is personal computer>

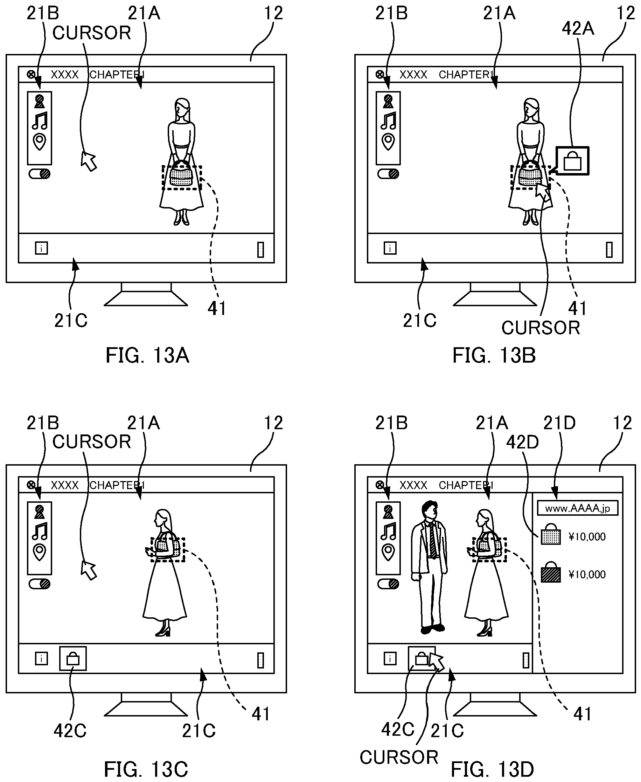

Figs. 13A to 13D are explanatory diagrams of a case where the user terminal 10 is a personal computer. As has already been described, the user terminal 10 may not only be a tablet-type portable terminal but also a personal computer, for example.

As illustrated in Fig. 13A, a moving image (e.g., a TV drama) is being reproduced in the display unit 12 (in this example, a liquid crystal display) of the user terminal 10 (in this example, the personal computer of the viewer). Similar to the aforementioned embodiments, an item area(s) is set in advance in a frame (still image) included in the moving image data, and in this example, an item area is set in advance in the area of the bag on the screen. Moreover, similar to the aforementioned embodiments, a frame line 41 (the rectangular dotted line in the figure) indicating the item area is displayed during reproduction of the moving image.

As illustrated in Fig. 13B, when the user terminal 10 detects that a cursor has entered the item area through an operation performed on a mouse (not illustrated in the figure) that serves as the input unit 13 (i.e., the item area has been selected using the input unit 13), the user terminal 10 displays the item image 42A (e.g., a thumbnail image) that is associated with the item area. Alternatively, when the user terminal 10 detects that an item area has been selected using the input unit 13 in the manner of a click operation (an operation of pressing a mouse button) being performed on the item area through an operation of the mouse (not illustrated in the figure) serving as the input unit 13, the user terminal 10 displays the item image 42A (e.g., a thumbnail image) that is associated with the item area.

Further, when the user terminal 10 detects that, in the state where the item image 42A is displayed due to the mouse operation mentioned earlier, a drag-and-drop operation (an operation of moving the cursor while pressing the mouse button and then releasing the button) is performed on the item area or the item image 42A, the user terminal 10 stores item information associated with the item area as stock information. Alternatively, when the user terminal 10 detects that, in the state where the item image 42A is displayed due to the mouse operation mentioned earlier, a click operation is performed on the item area or the item image 42A, the user terminal 10 stores item information associated with the item area as stock information. As illustrated in Fig. 13C, when predetermined item information is stored as stock information, the user terminal 10 displays an item image 42C (e.g., a thumbnail image) associated with the stock information (stocked item information) in the stock information display part 21C in the display unit 12.

As illustrated in Fig. 13D, when the user terminal 10 detects that a click operation has been performed on the area of the item image 42C displayed in the stock information display part 21C, the user terminal 10 executes a process according to event information associated with the item image 42C (item information).

Even when the user terminal 10 is, for example, a personal computer or the like instead of being a tablet-type portable terminal as described above, equivalent effects to those of the aforementioned embodiments can be achieved.

### <Case where area other than item area(s) is selected with input unit>

The above-described embodiments assume a case where an item area that is set in a frame being displayed is selected using the input unit 13. However, in an interface environment in which a viewer is allowed to select an item area as in the above-described embodiments, the viewer may select an area other than the item area(s) using the input unit 13. In this case, it is inferred that the area selected by the viewer includes an image of an object which the viewer is interested in. Preference Information of the viewer may be valuable information for business.

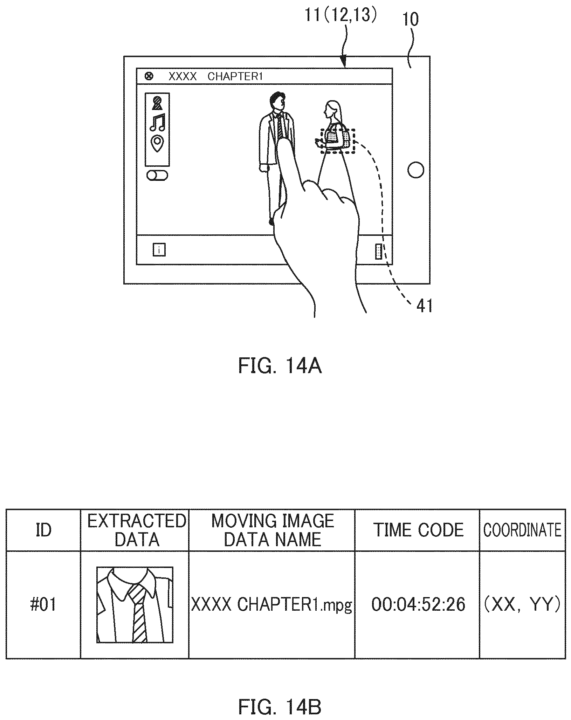

Fig. 14A is an explanatory diagram of a situation in which an area other than the item area(s) is selected using the input unit. In this example, the viewer performs a touch operation on the area of a tie of an actor being displayed. In such a case, it can be inferred that the viewer is interested in the tie of the actor.

Fig. 14B is an explanatory diagram of acquired data that is acquired by the user terminal 10. When an area other than the item area(s) is selected using the input unit, the user terminal 10 extracts an image in the selected area and its vicinity from the frame to acquire extracted data. It is preferred that the extracted data be associated with: information indicating a moving image data name for identifying the moving image of extraction source; time code information for the frame of extraction source; and a coordinate of the position on which selection has been performed using the input unit (i.e., the coordinate of the position on which the touch operation has been performed). In a case where the user terminal 10 has acquired in advance attribute information of the viewer (information such as gender and age), it is preferred that that the attribute information also be associated with the extracted data. Then, if the user terminal 10 transmits the acquired data (preference information) illustrated in Fig. 14B to an address of a predetermined data acquisition dealer, the data acquisition dealer can acquire the preference information of the viewer that may be valuable information for business.

Note that although the extracted data in this example is a still image, the extracted data may be a moving image instead. In that case, it is preferred that the user terminal 10 extracts a plurality of frames before and after the timing at which an area other than the item area(s) is selected using the input unit and extracts an image in the selected area and its vicinity from the each extracted frame, and thus acquires the moving image serving as the extracted data.

### Others

The foregoing embodiments are for facilitating the understanding of the present invention, and are not to be construed as limiting the present invention. The present invention may be modified and/or improved without departing from the gist thereof, and it goes without saying that the present invention encompasses any equivalents thereof.

### Reference Signs List

1: Moving image distribution server;
3: Metadata distribution server;
5: Program distribution server;
7: Metadata creation terminal;
9: Communication network;
10: User terminal;
11: Touch panel;
12: Display unit;
13: Input unit;
15: Control unit;
17: Communication unit;
21: Basic screen;
21A: Moving image display part;
21B: Icon display part;
21C: Stock information display part;
21D: Browser display part;
22: Remote-controller icon;
22A: Controller;
23: Information icon;
41: Frame line (image indicating item area);
42: Item image;
42A: Item image displayed in moving image display part;
42B: Item image displayed in icon display part;
42C: Item image displayed in stock information display part;
42D: Item image displayed in browser display part;
211: Frame line display button;
212: Performer icon;
213: Music icon;
214: Location icon.

## Claims

1. A moving image reproduction device comprising a display unit, an input unit, and a control unit, wherein
the control unit is configured to
display a moving image in the display unit by displaying frames included in moving image data in the display unit while changing the frames from one to the next sequentially,
set item areas while changing from one to the next as the frames are changed from one to the next sequentially, the item areas being set in advance to the frames, and
when one of the item areas that is set in a corresponding one of the frames that is being displayed in the display unit is selected using the input unit, display item information associated with the item area in the display unit.

2. The moving image reproduction device according to claim 1, wherein
when displaying each of the frames in the display unit, the control unit displays in the display unit an image indicating an item area set in a corresponding frame.

3. The moving image reproduction device according to claim 2, wherein:
item area setting data is set in advance for each of the frames, the item area setting data being for setting the item area, and
the control unit is configured to
set the item areas while changing from one to the next as the frames are changed from one to the next sequentially, on the basis of the item area setting data set for each of the frames,
when displaying each of the frames in the display unit, display, on the basis of corresponding item area setting data, the image indicating the item area in the display unit, and
when the one of the item areas that is set on the basis of the corresponding item area setting data is selected using the input unit, display item information associated with the corresponding item area setting data in the display unit.

4. The moving image reproduction device according to claim 2 or 3, wherein
displaying or hiding of the image indicating the item areas is selectable.

5. The moving image reproduction device according to any one of claims 1 to 4, wherein
when the one of the item areas that is set in the corresponding one of the frames being displayed in the display unit is selected using the input unit, an item image is displayed as the item information.

6. The moving image reproduction device according to claim 5, wherein
when the one of the item areas that is set in the corresponding one of the frames that is being displayed in the display unit is selected using the input unit, the item image is displayed in the vicinity of the item area.

7. The moving image reproduction device according to claim 5, wherein
when the one of the item areas that is set in the corresponding one of the frames that is being displayed in the display unit is selected using the input unit, the item image is displayed in a stock information display part indicating that the item information is stocked.

8. The moving image reproduction device according to claim 7, wherein:
the stock information display part is located outside a moving image display part that displays the moving image, and
when an operation is performed using the input unit from the one of the item areas set in the moving image display part toward the stock information display part, the item image is displayed in the stock information display part.

9. The moving image reproduction device according to any one of claims 1 to 8, wherein:
event information is set in advance as the item information, and
when the one of the item areas that is set in the corresponding one of the frames that is being displayed in the display unit is selected using the input unit, the item information associated with selected item area is displayed in the display unit as a result of a process according to the event information being executed.

10. The moving image reproduction device according to claim 9, wherein:
the event information indicates displaying a webpage of a set address, and
the item information associated with the item area is displayed in the display unit as a result of the webpage being displayed.

11. The moving image reproduction device according to any one of claims 1 to 10, wherein:
at least two item areas are set in a frame among the frames, and
when an overlapping area of the two item areas set in the frame that is being displayed in the display unit is selected using the input unit, item information associated with one of the two item areas is displayed in the display unit.

12. The moving image reproduction device according to claim 11, wherein:
a priority is set for each of the two item areas set in each of the frames, and
when the overlapping area of the two item areas set in the one of the frames that is being displayed in the display unit is selected using the input unit, the item information for an item area with a higher priority among the two item areas is displayed in the display unit.

13. The moving image reproduction device according to claim 12, wherein:
in a case where an entire area of one of the two item areas set in the one of the frames is encompassed by the other of the two item areas, the priority for the one of the two item areas is set to be higher than the priority for the other of the two item areas, and
when the overlapping area of the two item areas set in the one of the frames that is being displayed in the display unit is selected using the input unit, item information associated with the one of the two item areas is displayed in the display unit.

14. The moving image reproduction device according to any one of claims 1 to 11, wherein:
at least two item areas are set in a frame among the frames, and an entire area of one of the two item areas is encompassed by the other of the two item areas, and
when an overlapping area of the two item areas set in the frame that is being displayed in the display unit is selected using the input unit, item information associated with the one of the two item areas is displayed in the display unit.

15. The moving image reproduction device according to any one of claims 1 to 14, wherein
when an area other than the item areas is selected using the input unit, extracted data is acquired by extracting information pertaining to selected area from the moving image data.

16. The moving image reproduction device according to claim 15, wherein
when the area other than the item areas is selected using the input unit, an image in the selected area and its vicinity is extracted from a corresponding frame.

17. The moving image reproduction device according to claim 15 or 16, wherein
the extracted data includes time code information for the frame of an extraction source and a coordinate of the area selected using the input unit.

18. The moving image reproduction device according to any one of claims 15 to 17, wherein the extracted data is associated with attribute information of a viewer.

19. A moving image reproduction method for reproducing a moving image on the basis of moving image data and metadata associated with the moving image data, the moving image reproduction method comprising:
displaying the moving image in a display unit by displaying frames included in the moving image data in the display unit while changing the frames from one to the next sequentially;
setting item areas while changing from one to the next as the frames are changed from one to the next sequentially, the item areas being set in advance to the frames; and
when one of the item areas that is set in a corresponding one of the frames that is being displayed in the display unit is selected using an input unit, displaying item information associated with the item area in the display unit.

20. A moving image distribution system that distributes moving image data and metadata associated with the moving image data, the moving image distribution system comprising:
a server configured to distribute the moving image data for causing a display unit of a moving image reproduction device to display a moving image by displaying frames in the display unit while changing the frames from one to the next sequentially;
a server configured to distribute the metadata for setting item areas in advance to the frames, and setting the item areas while changing from one to the next as the frames are changed from one to the next sequentially; and
a server configured to distribute a program for, when one of the item areas that is set in a corresponding one of the frames that is being displayed in the display unit is selected using an input unit of the moving image reproduction device, displaying item information associated with the item area in the display unit.

21. A storage medium with a moving image reproduction program stored therein, the moving image reproduction program causing a moving image reproduction device including a display unit and an input unit to execute:
displaying a moving image in the display unit by displaying frames included in moving image data in the display unit while changing the frames from one to the next sequentially;
setting item areas while changing from one to the next as the frames are changed from one to the next sequentially, the item areas being set in advance to the frames; and
when one of the item areas that is set in a corresponding one of the frames that is being displayed in the display unit is selected using the input unit, displaying item information associated with the item area in the display unit.

22. A moving image reproduction program for causing a moving image reproduction device including a display unit and an input unit to execute:
displaying a moving image in the display unit by displaying frames included in moving image data in the display unit while changing the frames from one to the next sequentially;
setting item areas while changing from one to the next as the frames are changed from one to the next sequentially, the item areas being set in advance to the frames; and
when one of the item areas that is set in a corresponding one of the frames that is being displayed in the display unit is selected using the input unit, displaying item information associated with the item area in the display unit.
